| | Europäisches Patentamt |
|---|---|
| (19) | European Patent Office |
| | Office européen des brevets |

(11) **EP 0 981 401 B1**

(12) **FASCICULE DE BREVET EUROPEEN**

(45) Date de publication et mention
de la délivrance du brevet:
**19.12.2001 Bulletin 2001/51**

(51) Int Cl.⁷: **B01D 53/34**, B01D 53/83

(21) Numéro de dépôt: **98924309.2**

(22) Date de dépôt: **07.05.1998**

(86) Numéro de dépôt international:
**PCT/EP98/02828**

(87) Numéro de publication internationale:
**WO 98/51400 (19.11.1998 Gazette 1998/46)**

(54) **COMPOSITION REACTIVE PULVERULENTE ET PROCEDE POUR L'EPURATION D'UN GAZ**

REAKTIVE PULVERIGE ZUSAMMENSETZUNG UND VERFAHREN ZUR GASREINIGUNG

REACTIVE POWDER COMPOSITION AND METHOD FOR PURIFYING GAS

(84) Etats contractants désignés:
**AT BE CH DE DK ES FI FR GB GR IE IT LI LU NL
PT SE**

(30) Priorité: **14.05.1997 BE 9700417**

(43) Date de publication de la demande:
**01.03.2000 Bulletin 2000/09**

(73) Titulaire: **SOLVAY (Société Anonyme)
1050 Bruxelles (BE)**

(72) Inventeurs:
• **FAGIOLINI, Nilo
I-57013 Rosignano-Solvay (IT)**
• **DEPELSENAIRE, Guy
B-1490 Court-Saint-Etienne (BE)**
• **BERTEAU, Pascal
B-1348 Louvain-La-Neuve (BE)**

(74) Mandataire: **Dufrasne, Eugène et al
Solvay S.A., Département Propriété Industrielle,
310, rue de Ransbeek
1120 Bruxelles (BE)**

(56) Documents cités:
| WO-A-93/04983 | DE-A- 4 100 645 |
|---|---|
| US-A- 4 767 605 | US-A- 5 002 741 |

**Description**

L'invention concerne l'épuration des gaz.

Elle concerne plus particulièrement une composition réactive à base de bicarbonate de sodium, utilisable pour l'épuration des gaz.

Les activités humaines génèrent des quantités importantes de gaz contaminés par des substances toxiques. Le chlorure d'hydrogène, le fluorure d'hydrogène, les oxydes de soufre, les oxydes d'azote, les dioxines e: les furannes constituent des exemples de substances toxiques fréquemment rencontrées dans ces gaz. On les retrouve notamment, en quantités variables, dans les fumées générées par les installations d'incinération de déchets ménagers ou hospitaliers et dans les fumées générées par la combustion de combustibles d'origine fossile, notamment dans les centrales thermiques de fabrication d'électricité et dans les installations centralisées de chauffage urbain. Ces fumées doivent généralement être débarrassées des ces substances toxiques, avant d'être rejetées dans l'atmosphère.

Le procédé NEUTREC® [SOLVAY (Société Anonyme)] est un procédé efficace pour épurer des gaz. Selon ce procédé connu, on injecte du bicarbonate de sodium à l'état d'une poudre dans le gaz et le gaz ainsi traité est ensuite envoyé sur un filtre pour le dépoussiérer (SOLVAY S.A., brochure Br. 1566a-B-1-0396).

Le bicarbonate de sodium en poudre présente une tendance naturelle à l'agglutination, ce qui constitue un désavantage. Pour lutter contre cette propriété désavantageuse du bicarbonate de sodium, on a songé à y additionner de la silice (Klein Kurt - "Grundlagen und anwendungen einer durch Flammenhydrolyse gewonnenen Kieselsäure : Teil 4 : AEROSIL zur Verbesserung des Fliessverhaltens pulverförmiger Substanzen" - Seifen-Ole-Fette-Wachse - 20 Nov. 1969, p. 849-858). Du bicarbonate de sodium additionné de silice s'est toutefois révélé peu satisfaisant pour l'épuration des gaz contenant du chlorure d'hydrogène.

Il est connu (US-A-5002741) d'épurer des gaz par injection, sous forme de poudre, d'un composé de sodium, de préférence du bicarbonate, additionné de carbone finement dispersé dans le courant gazeux, suivi d'un dépoussiérage,

Il est également connu (DE-A-4100645) d'épurer des gaz par injection d'une substance basique alcaline et/ou alcalino-terreuse (p.ex, du bicarbonate) et d'un composé basique comprenant de l'azote, éventuellement en présence d'un additif à grande surface spécifique (p.ex. du coke de lignite).

L'invention tend à résoudre la tendance à l'agglutination du bicarbonate de sodium, tout en évitant l'inconvénient, mentionné plus haut, lié à la présence de silice, L'invention vise dès lors à fournir une composition réactive pulvérulente contenant du bicarbonate de sodium, qui présente une bonne résistance à l'agglutination et une bonne efficacité pour épurer un gaz,

En conséquence l'invention concerne une composition réactive, solide, pulvérulente pour l'épuration d'un gaz, ladite composition comprenant du bicarbonate de sodium et un inhibiteur d'agglutination du bicarbonate de sodium ; la composition se caractérise par le fait qu'elle est sensiblement exempte de silice et par le fait que l'inhibiteur comprend du coke de lignite et/ou un composé du magnésium comprenant de l'(hydr)oxyde de magnésium.

La composition selon l'invention est sensiblement exempte de silice. On entend par "sensiblement exempte de silice" que la quantité de silice dans la composition réactive est insuffisante pour avoir une influence perceptible sur l'agglutination du bicarbonate de sodium, en présence d'air atmosphérique, à la température de 20 °C et à la pression atmosphérique normale. De préférence, la composition selon l'invention est rigoureusement exempte de silice.

Le coke de lignite est le produit obtenu par cokéfaction du lignite, qui est un combustible fossile solide présentant un pouvoir calorifique inférieur à 8,300 Btu/lb (19,3 kJ/g) selon la norme ASTM D 388 (Ullmann's Encyclopedia of Industrial Chemistry, 5th Edition, Vol. A 7, 1986, pages 160-161).

On entend désigner par (hydr)oxyde de magnésium, à la fois l'oxyde de magnésium, l'hydroxyde de magnésium ou les mélanges d'oxyde et d'hydroxyde de magnésium. Le composé de magnésium comprend avantageusement de l'hydroxycarbonate de magnésium de formule générale $4MgCO_3, Mg(OH)_2, 4H_2O$.

En plus du bicarbonate de sodium et de l'inhibiteur, la composition réactive selon l'invention peut éventuellement contenir d'autres constituants, par exemple du monocarbonate de sodium ou du charbon actif.

La composition réactive selon l'invention contient de préférence plus de 85 % (avantageusement au moins 90 %) en poids de bicarbonate de sodium. Sa teneur pondérale en inhibiteur est de préférence supérieure à 0,5 % (avantageusement au moins égale à 2 %) du poids de bicarbonate de sodium. En général, la teneur pondérale en inhibiteur n'excède pas 10 % (de préférence 7 %) du poids du bicarbonate de sodium, Dans le cas où l'inhibiteur comprend du coke de lignite, celui-ci est de préférence présent en une quantité pondérale supérieure à 3 % (avantageusement au moins égale à 5 %) du poids du bicarbonate de sodium. Dans le cas où l'inhibiteur comprend un composé du magnésium tel que défini plus haut, celui-ci est de préférence présent en une quantité pondérale supérieure à 1 % (avantageusement au moins égale à 2 %) du poids du bicarbonate de sodium.

Dans le cas où la composition réactive selon l'invention contient du monocarbonate de sodium (de formule générale $Na_2CO_3$), il est souhaitable que sa teneur pondérale en monocarbonate de sodium soit inférieure à 2 % (de préférence au maximum égale à 1 %) du poids global de bicarbonate de sodium et de monocarbonate de sodium.

Dans une forme de réalisation spécialement recommandée de la composition selon l'invention, celle-ci présente une granulométrie définie par un diamètre moyen de particule inférieur à 50 μm (de préférence au maximum égal à 30 μm) et une pente granulométrique inférieure à 5 (de préférence au maximum égale à 3). Dans cette forme de réalisation de l'invention, le diamètre moyen ($D_m$) et la pente granulométrique ($\sigma$) sont définis par les relations suivantes :

$$D_m = \frac{\sum n_i . D_i}{\sum n_i}, \qquad \sigma = \frac{D_{90} - D_{10}}{D_{50}}$$

dans lesquelles $n_i$ désigne la fréquence (en poids) des particules de diamètre $D_i$, et $D_{90}$ (respectivement $D_{50}$ et $D_{10}$) représente le diamètre pour lequel 90 % (respectivement 50 % et 10 %) des particules de la composition réactive (exprimées en poids) ont un diamètre inférieur à $D_{90}$ (respectivement $D_{50}$ et $D_{10}$). Ces paramètres granulométriques sont définis par la méthode d'analyse par diffraction de rayons laser utilisant un appareil de mesure SYMPATEC modèle HELOS 12LA fabriqué par SYMPATEC GmbH.

La composition réactive selon l'invention trouve une application en tant qu'agent pour l'épuration des gaz contaminés par du chlorure d'hydrogène, du fluorure d'hydrogène, des oxydes de soufre (principalement du dioxyde de soufre), des oxydes d'azote (principalement de l'oxyde nitrique NO et du peroxyde d'azote $NO_2$), des dioxines et des furannes. Elle trouve une application spécialement avantageuse pour l'épuration des fumées générées par les incinérateurs de déchets urbains ou de déchets hospitaliers.

L'invention concerne également un procédé pour l'épuration d'un gaz, selon lequel on introduit dans le gaz une composition réactive comprenant du bicarbonate de sodium et on soumet ensuite le gaz à un dépoussiérage, le procédé se caractérisant en ce que la composition réactive est conforme à l'invention.

Dans le procédé selon l'invention, la composition réactive est introduite à l'état solide dans le gaz. La température du gaz est généralement supérieure à 100 °C (de préférence supérieure à 125 °C) lors de l'introduction de la composition réactive. On recommande que la température du gaz n'excède pas 800 °C, de préférence 600 °C, Des températures de 140 à 250 °C conviennent bien. La composition réactive est généralement introduite dans un courant de gaz, circulant dans une chambre de réaction. Dans celle-ci, les contaminants du gaz sont adsorbés sur les particules de bicarbonate de sodium (dans le cas de dioxines ou de furannes) ou réagissent avec celles-ci pour former des résidus solides (par exemple du chlorure ou du fluorure de sodium, du sulfate de sodium ou du nitrite et du nitrate de sodium, selon que les contaminants du gaz comprennent du chlorure d'hydrogène, du fluorure d'hydrogène, des oxydes de soufre ou des oxydes d'azote). Le dépoussiérage du gaz a pour fonction d'en extraire les résidus solides ainsi formés. Il peut être réalisé par tous moyens connus approgriés, par exemple par séparation mécanique dans un cyclone, par filtration à travers un tissu filtrant ou par séparation électrostatique. La filtration à travers un tissu filtrant a la préférence.

Conformément à l'invention, on a trouvé que les compositions réactives de bicarbonate de sodium, qui sont sensiblement exemptes de silice, présentent une efficacité d'épuration des gaz, supérieure à celle des compositions de bicarbonate de sodium contenant de la silice. Cette efficacité améliorée des compositions selon l'invention, vis-à-vis de celles contenant de la silice se manifeste principalement dans le cas où le dépoussiérage est opéré au moyen d'un tissu filtrant. Bien que ne souhaitant pas être liés par une explication théorique, les inventeurs pensent que cette plus grande efficacité des compositions exemptes de silice est imputable au fait que ces compositions adhèrent mieux au tissu filtrant que les compositions contenant de la silice.

Le procédé selon l'invention trouve une application spécialement avantageuse pour l'épuration d'une fumée provenant de l'incinération de déchets urbains ou de déchets hospitaliers, ces déchets contenant généralement des composés chlorés et des chlorures métalliques susceptibles de générer du chlorure d'hydrogène au cours de l'incinération. Ces déchets renferment généralement aussi des métaux lourds et des résidus soufrés, notamment du dioxyde de soufre, que l'on retrouve au moins en partie dans la fumée. Dans cette application particulière du procédé selon l'invention, le produit solide que l'on recueille du dépoussiérage comprend dès lors habituellement, en plus du chlorure de sodium, des métaux lourds à l'état métallique ou combiné, ainsi que du carbonate de sodium et du sulfate de sodium. Ce produit solide peut être traité de la manière exposée dans la demande internationale WO 93/04983 [SOLVAY (Société Anonyme)].

Le procédé selon l'invention trouve également une application pour l'épuration des fumées générées par la combustion de combustibles fossiles (gaz naturel, dérivés liquides du pétrole, houille), ces fumées étant contaminées par du dioxyde de soufre et des oxydes d'azote.

Le procédé selon l'invention trouve par ailleurs une application pour l'épuration des gaz combustibles obtenus par gazéification de la houille, ces gaz étant généralement contaminés par du chlorure d'hydrogène, du fluorure d'hydrogène et du dioxyde de soufre.

L'intérêt de l'invention va ressortir de la description des exemples suivants, en référence aux dessins annexés.

La figure 1 montre schématiquement un empilement de sacs contenant une composition réactive;

La figure 2 montre schématiquement un dispositif utilisé pour définir la fluidité d'une composition réactive, pulvérulente.

Dans ces figures, des mêmes numéros de référence désignent des éléments identiques.

Première série d'essais.

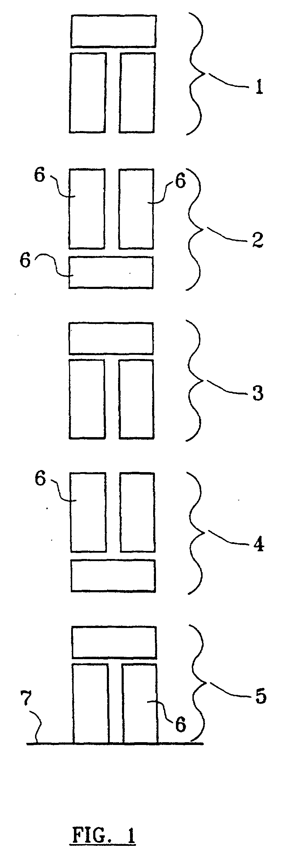

Les exemples 1 à 6 concernent des essais de stockage de compositions réactives conformes à l'invention, dans le but d'apprécier leur résistance à l'agglutination. A cet effet, dans chacun de ces exemples, une composition réactive, solide et pulvérulente a été ensachée dans 15 sacs en polyéthylène de 40 kg, que l'on a obturé hermétiquement. Les 15 sacs ont été empilés sur un support 7, de la manière représentée à la figure 1, de manière à former cinq rangs (1, 2, 3, 4, 5) de trois sacs 6 et l'empilage des sacs a été stocké dans un magasin normalement aéré et maintenu à la température ambiante. A l'issue du stockage, on a ouvert les sacs, on y a prélévé des échantillons, de manière statistique, et on a procédé à deux tests sur les échantillons prélevés. Un premier test a servi à définir la tendance à l'agglutination de la composition. Le second test a servi à évaluer la fluidité de la composition réactive, c'est-à-dire son aptitude à s'écouler librement.

Pour le test visant à définir la tendance à l'agglutination, on a déversé les sacs sur une grille calibrée présentant des mailles rectangulaires de 12x19 mm, et on a défini le taux d'agglutination de la poudre par la relation

$$T = \frac{\text{Quantité pondérale d'agglomérats retenus sur la grille}}{\text{Poids total de poudre déversée sur la grille}} \times 100$$

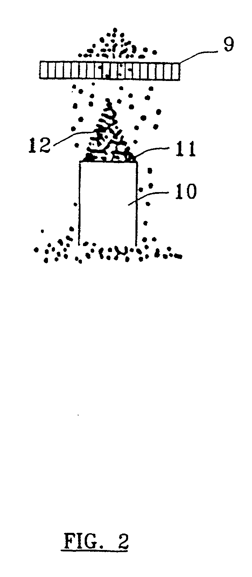

Pour le test visant à définir la fluidité de la composition réactive, on a utilisé le dispositif schématisé à la figure 2. Celui-ci comprend un tamis 9 présentant une ouverture de maille de 710 µm, disposé au-dessus d'un cylindre vertical 10 de 50 mm de diamètre. Pour le test, on a déversé la poudre à travers le tamis, on l'a recueillie sur la face horizontale supérieure 11 du cylindre 10 et on a mesuré la hauteur maximum du cône de poudre 12 formé sur la face 11 du cylindre 10. Selon ce test, la fluidité de la poudre est d'autant meilleure que la hauteur du cône 12 est petite.

Exemple 1 (non conforme à la revendication 1)

Dans cet exemple, on a mis en oeuvre une composition réactive comprenant du bicarbonate de sodium broyé et criblé, 0,48 % en poids de silice et 4,6 % en poids de coke de lignite (les teneurs en silice et en coke de lignite sont exprimées par rapport au poids de bicarbonate de sodium). Le criblage du bicarbonate de sodium a été réglé de manière que celui-ci soit à l'état de particules n'excédant pas 13 µm de diamètre, la composition réactive présentant une granulométrie définie par les caractéristiques suivantes (définies plus haut), exprimées en µm :

D10 = 7,0
D50 = 29,7
D90 = 70,3

A l'issue d'un stockage de trois mois, on a soumis la composition aux deux tests définis plus haut. On a obtenu les résultats suivants :

Tendance à l'agglutination (test sur trois échantillons) :

Echantillon n° 1 : 0,50 %
Echantillon n° 2 : 2,98 %
Echantillon n° 3 : 0,11 %

Fluidité (test sur cinq échantillons) :

Echantillon n° 1 : 40 mm
Echantillon n° 2 : 36 mm
Echantillon n° 3 : 40 mm
Echantillon n° 4 : 39 mm
Echantillon n° 5 : 38 mm
Moyenne : 39 mm

Exemple 2

On a répété les essais de l'exemple 1 avec une composition réactive comprenant du bicarbonate de sodium broyé et criblé, 1,89 % en poids d'hydroxycarbonate de magnésium et 5 % en poids de coke de lignite (les teneurs en hydroxycarbonate de magnésium et en coke de lignite sont exprimées par rapport au poids de bicarbonate de sodium. Le criblage du bicarbonate de sodium a été réglé comme à l'exemple 1, de manière qu'il soit à l'état de particules n'excédant pas 13 μm de diamètre, la composition réactive présentant une granulométrie définie par les caractéristiques suivantes (définies plus haut), exprimées en μm :

D10=6,6
D50 = 33,7
D90 = 75,4

A l'issue du stockage de trois mois, on a obtenu les résultats suivants :

Tendance à l'agglutination (test sur trois échantillons) : 0 %
Fluidité (test sur cinq échantillons) :

Echantillon n° 1 : 34 mm
Echantillon n° 2 : 38 mm
Echantillon n° 3 : 37 mm
Echantillon n° 4 : 36 mm
Echantillon n° 5 : 39 mm
Moyenne : 37 mm

Exemple 3

On a répété les essais de l'exemple 1 avec une composition réactive comprenant du bicarbonate de sodium broyé et criblé et 5,1 % en poids de coke de lignite, la teneur en coke de lignite étant exprimée par rapport au poids de bicarbonate de sodium. Le criblage du bicarbonate de sodium a été réglé comme à l'exemple 1, de manière qu'il soit à l'état de particules n'excédant pas 13 μm de diamètre, la composition réactive présentant une granulométrie définie par les caractéristiques suivantes (définies plus haut), exprimées en μm :

D10 = 7,0
D50 = 35,1
D90 = 85,0

A l'issue du stockage de trois mois, on a obtenu les résultats suivants :

Tendance à l'agglutination (test sur trois échantillons) : 0 %
Fluidité (test sur cinq échantillons) :

Echantillon n° 1 : 37 mm
Echantillon n° 2 : 38 mm
Echantillon n° 3 : 41 mm
Echantillon n° 4 : 40 mm
Echantillon n° 5 : 38 mm
Moyenne : 39 mm

Les exemples qui précèdent montrent que les compositions réactives conformes à l'invention supportent correctement un stockage de plusieurs mois. Une comparaison des résultats des exemples 2 et 3 avec ceux de l'exemple 1 montrent par ailleurs que l'absence de silice dans la composition réactive ne nuit pas à son aptitude au stockage.

Exemples 4 à 6

Dans les exemples 4 à 6, on a répété les essais des exemples 1 à 3 respectivement, avec une durée de stockage de six mois. Les caractéristiques des compositions sont mentionnées dans le tableau 1 ci-dessous.

Tableau 1

|  | Exemples n° | | |
|---|---|---|---|
|  | 4* | 5 | 6 |
| Silice (%) | 0,5 |  |  |
| Hydroxycarbonate de magnésium (%) |  | 2 |  |
| Coke de lignite (%) | 5 | 5 | 5 |
| D10 (μm) | 7,6 | 12,3 | 7,7 |
| D50 (μm) | 30,0 | 41,2 | 36,7 |
| D90 (μm) | 69,1 | 83,4 | 79,4 |

Les résultats obtenus à l'issue du stockage de six mois sont mentionnés dans le tableau 2 ci-dessous.

*non conforme à la revendication 1

Tableau 2

|  | Exemples n° | | |
|---|---|---|---|
|  | 4 | 5 | 6 |
| Tendance à l'agglutination |  |  |  |
| Echantillon n° 1 | 0 | 0 | 0 |
| Echantillon n° 2 | 3,2 | 0 | 0 |
| Echantillon n° 3 | 3,1 | 0 | 0 |
| Echantillon n° 4 | 1,8 | 0 | 0 |
| Echantillon n° 5 | 0 | 0 | 0 |
| Fluidité |  |  |  |
| Echantillon n° 1 | 43 | 29 | 43 |
| Echantillon n° 2 | 41 | 30 | 38 |
| Echantillon n° 3 | 46 | 29 | 43,5 |
| Echantillon n° 4 | 44 | 28 | 45 |
| Echantillon n° 5 | 43 | 30 | 41 |

Les exemples 4 à 6 confirment les résultats des exemples 1 à 3 en démontrant l'excellente aptitude des compositions réactives selon l'invention, exemptes de silice.

Seconde série d'essais

Les exemples 7 à 10 concernent des essais effectués dans le but de mesurer l'efficacité de compositions réactives à épurer un gaz en chlorure d'hydrogène.
Le gaz traité dans chaque essai a été une filmée provenant d'un incinérateur de déchets ménagers, contenant du chlorure d'hydrogène et du dioxyde de soufre. On a introduit dans la filmée une quantité au moins suffisante d'une composition réactive comprenant du bicarbonate de sodium, pour amener sa teneur résiduelle en chlorure d'hydrogène au-dessous de 50 mg/Nm$^3$ (Norme européenne 89/369/CEE) ou de 10 mg/Nm$^3$ (Norme européenne 94/67/CEE ou Norme allemande 17.BIm SchV). Après addition de la composition réactive, la filmée a été filtrée sur un tissu filtrant pour la dépoussiérer.

Exemple 7 (non conforme à la revendication 1)

Dans cet exemple, la composition réactive mise en oeuvre a consisté essentiellement en bicarbonate de sodium, sans additif. En particulier, la composition réactive fut exempte de silice.

L'essai a duré 390 minutes. Durant l'essai, on a mesuré en continu le débit de la fumée, le débit de la composition réactive introduite dans la fumée et les teneurs de celle-ci en chlorure d'hydrogène et en dioxyde de soufre, respectivement en amont de l'ajout de la composition réactive et en aval du tissu filtrant. Au départ de ces mesures, on a calculé, d'une part, le rapport stoechiométrique (R.S.) entre la quantité de bicarbonate de sodium effectivement mise en oeuvre et la quantité stoechiométrique nécessaire et, d'autre part, le taux d'épuration en chlorure d'hydrogène, celui-ci étant défini par la relation

$$\tau = \frac{HCl_i - HCl_f}{HCl_i} \times 100,$$

où $HCl_i$ désigne la teneur de la fumée en chlorure d'hydrogène en amont de l'addition de la composition réactive et $HCl_f$ désigne la teneur de la fumée en chlorure d'hydrogène en aval de ladite addition. Dans l'essai, la quantité stoechiométrique de bicarbonate de sodium est celle nécessaire pour éliminer le chlorure d'hydrogène et le dioxyde de soufre de la fumée, selon les réactions théoriques suivantes :

$$HCl + NaHCO_3 \rightarrow NaCl + H_2O + CO_2$$

$$SO_2 + 2NaHCO_3 + 1/2\ O_2 \rightarrow Na_2SO_4 + H_2O + 2CO_2$$

Les résultats de l'essai (moyenne arithmétique sur les 390 minutes) sont consignés ci-dessous :

| Fumée | |
|---|---|
| Débit (Nm$^3$/h) | 2 378 |
| $HCl_i$ (mg/Nm$^3$) | 1 530 |
| $HCl_f$ (mg/Nm$^3$) | 9 |
| Composition réactive | |
| Débit NaHCO$_3$ (kg/h) | 13 |
| R.S. | 1,49 |
| Taux d'épuration (%) | 99,4 |

Exemple 8 (non conforme à l'invention)

L'essai de l'exemple 7 a été répété avec une composition réactive constituée de bicarbonate de sodium et de silice (0,5 g de silice pour 100 g de bicarbonate de sodium). Les résultats de l'essai (qui a duré 360 minutes) sont mentionnés ci-dessous.

| Fumée | |
|---|---|
| Débit(Nm$^3$/h) | 1 697 |
| $HCl_i$ (mg/Nm$^3$) | 2 018 |
| $HCl_f$ (mg/Nm$^3$) | 39 |

(suite)

| Composition réactive | |
|---|---|
| Débit NaHCO$_3$ (kg/h) | 26 |
| R.S. | 3,07 |
| Taux d'épuration (%) | 98,1 |

Une comparaison des résultats de l'exemple 7 avec ceux de l'exemple 8 (non conforme à l'invention) fait immédiatement apparaître l'intérêt d'éviter, conformément à l'invention, la présence de silice dans la composition réactive.

Exemple 9 (conforme à l'invention)

L'essai de l'exemple 7 a été répété avec une composition réactive conforme à l'invention, exempte de silice et constituée d'un mélange homogène de bicarbonate de sodium et d'hydroxycarbonate de magnésium (2 g par 100 g de bicarbonate de sodium). Les résultats de l'essai (qui a duré 67 heures) sont mentionnés ci-dessous.

| Fumée | |
|---|---|
| Débit (Nm$^3$/h) | 24 000 |
| HCl$_i$ (mg/Nm$^3$) | 1 060 |
| HCl$_f$ (mg/Nm$^3$) | 32 |
| Composition réactive | |
| Débit NaHCO$_3$ (kg/h) | 63,7 |
| R.S. | 1,11 |
| Taux d'épuration (%) | 99,0 |

Exemple 10

L'essai de l'exemple 7 a été répété avec une composition réactive conforme à l'invention, exempte de silice et constituée d'un mélange homogène de bicarbonate de sodium et de coke de lignite (5 g par 100 g de bicarbonate de sodium). Les résultats de l'essai (qui a duré 81 heures) sont mentionnés ci-dessous.

| Fumée | |
|---|---|
| Débit (Nm$^3$/h) | 24 000 |
| HCl$_i$ (mg/Nm$^3$) | 925 |
| HCl$_f$ (mg/Nm$^3$) | 46 |
| Composition réactive | |
| Débit NaHCO$_3$ (kg/h) | 63,8 |
| R.S. | 1,09 |
| Taux d'épuration (%) | > 99,9 |

Les exemples 9 et 10 montrent l'influence positive de l'hydroxycarbonate de magnésium et du coke de lignite sur l'efficacité de la composition réactive.

**Revendications**

1.    Composition réactive, solide, pulvérulente pour l'épuration d'un gaz, comprenant du bicarbonate de sodium et un inhibiteur d'agglutination du bicarbonate de sodium, **caractérisée en ce qu'**elle est sensiblement exempte de silice et **en ce que** l'inhibiteur comprend du coke de lignite et/ou un composé du magnésium comprenant de l'(hydr)oxyde de magnésium.

2.    Composition selon la revendication 1, **caractérisée en ce que** le composé du magnésium comprend de l'hydroxycarbonate de magnésium.

**3.** Composition selon la revendication 1 ou 2, **caractérisée en ce qu'**elle comprend au moins 90 % en poids de bicarbonate de sodium et **en ce que** sa teneur pondérale en inhibiteur est supérieure à 0,5 % du poids de bicarbonate de sodium.

**4.** Composition selon la revendication 3, **caractérisée en ce que**, dans le cas où l'inhibiteur comprend un composé du magnésium, celui-ci est présent en une quantité pondérale au moins égale à 2 % du poids de bicarbonate de sodium.

**5.** Composition selon la revendication 3, **caractérisée en ce que**, dans le cas où l'inhibiteur comprend du coke de lignite, celui-ci est présent en une quantité au moins égale à 5 % du poids de bicarbonate de sodium.

**6.** Procédé pour l'épuration d'un gaz, selon lequel on introduit dans le gaz une composition réactive comprenant du bicarbonate de sodium et on soumet le gaz à un dépoussiérage, **caractérisé en ce que** la composition réactive est conforme à l'une quelconque des revendications 1 à 5.

**7.** Procédé selon la revendication 6, **caractérisé en ce que** le dépoussiérage comprend une filtration à travers un tissu filtrant.

**8.** Procédé selon la revendication 6 ou 7, pour l'épuration d'un gaz en au moins un contaminant sélectionné parmi le chlorure d'hydrogène, le fluorure d'hydrogène, les oxydes de soufre, les oxydes d'azote, les dioxines et les furannes.

**Claims**

**1.** Solid pulverulent reactive composition for the purification of a gas, comprising sodium bicarbonate and a caking inhibitor for sodium bicarbonate, **characterized in that** it is substantially devoid of silica and **in that** the inhibitor comprises lignite coke and/or a magnesium compound comprising magnesium (hydr)oxide.

**2.** Composition according to Claim 1, **characterized in that** the magnesium compound comprises basic magnesium carbonate.

**3.** Composition according to Claim 1 or 2, **characterized in that** it comprises at least 90% by weight of sodium bicarbonate and **in that** its content by weight of inhibitor is greater than 0.5% of the weight of sodium bicarbonate.

**4.** Composition according to Claim 3, **characterized in that**, in the case where the inhibitor comprises a magnesium compound, the latter is present in an amount by weight at least equal to 2% of the weight of sodium bicarbonate.

**5.** Composition according to Claim 3, **characterized in that**, in the case where the inhibitor comprises lignite coke, the latter is present in an amount at least equal to 5% of the weight of sodium bicarbonate.

**6.** Process for the purification of a gas, according to which a reactive composition comprising sodium bicarbonate is introduced into the gas and the gas is subjected to removal of dust, **characterized in that** the reactive composition is in accordance with any one of Claims 1 to 5.

**7.** Process according to Claim 6, **characterized in that** the removal of dust comprises filtration through a filter cloth.

**8.** Process according to Claim 6 or 7, for the purification of a gas from at least one contaminant selected from hydrogen chloride, hydrogen fluoride, sulphur oxides, nitrogen oxides, dioxins and furans.

**Patentansprüche**

**1.** Pulvrige, feste, reaktive Zusammensetzung zum Reinigen eines Gases, umfassend Natriumbicarbonat und einen Verklumpungsinhibitor für Natriumbicarbonat, **dadurch gekennzeichnet, dass** sie etwa frei von Siliziumdioxid ist und dass der Inhibitor Braunkohlenkoks und/oder eine Magnesiumverbindung enthält, die Magnesium(hydr)oxid umfasst.

2. Zusammensetzung nach Anspruch 1, **dadurch gekennzeichnet, dass** die Magnesiumverbindung Magnesiumhydroxycarbonat enthält.

3. Zusammensetzung nach Anspruch 1 oder 2, **dadurch gekennzeichnet, dass** sie mindestens 90 Gew.-% Natriumbicarbonat enthält und worin der Gehalt in Gewicht an Inhibitor größer als 0,5 Gew.-% des Natriumbicarbonats ist.

4. Zusammensetzung nach Anspruch 3, **dadurch gekennzeichnet, dass**, für den Fall, dass der Inhibitor eine Magnesiumverbindung enthält, diese in einer Gewichtsmenge von mindestens gleich 2 Gew.-% des Natriumbicarbonats vorhanden ist.

5. Zusammensetzung nach Anspruch 3, **dadurch gekennzeichnet, dass**, für den Fall, dass der Inhibitor Braunkohlenkoks enthält, dieser in einer Menge von mindestens gleich 5 Gew.-% des Natriumbicarbonats vorhanden ist.

6. Verfahren zur Reinigung eines Gases, worin man in das Gas eine reaktive Zusammensetzung einführt, die Natriumbicarbonat umfasst, und man das Gas einer Staubentfernung unterwirft, **dadurch gekennzeichnet, dass** die reaktive Zusammensetzung in Übereinstimmung mit einem der Ansprüche 1 bis 5 ist.

7. Verfahren nach Anspruch 6, **dadurch gekennzeichnet, dass** die Staubentfernung eine Filtration durch ein Filtergewebe umfasst.

8. Verfahren nach einem der Ansprüche 6 oder 7 zur Reinigung eines Gases von mindestens einer Verunreinigung ausgewählt aus Chlorwasserstoff, Fluorwasserstoff, Schwefeloxiden, Stickoxiden, Dioxinen und Furanen.

FIG. 1

FIG. 2